# EUROPÄISCHE PATENTSCHRIFT

(11) **EP 3 643 527 B1**
(45) Veröffentlichungstag und Bekanntmachung des Hinweises auf die Patenterteilung: **29.12.2021**
(21) Anmeldenummer: 19197643.0
(22) Anmeldetag: 17.09.2019
(51) Int. Cl.: B60C 11/13, B60C 11/03

(54) **FAHRZEUGLUFTREIFEN**
PNEUMATIC TYRE
PNEUMATIQUES DE VÉHICULE

(30) Priorität: 25.10.2018 DE 102018218252
(43) Veröffentlichungstag der Anmeldung: 29.04.2020
(73) Patentinhaber: Continental Reifen Deutschland GmbH, 30165 Hannover (DE)
(72) Erfinder: Bosse, Stefan, 30165 Hannover (DE); Röger, Bernhard, 30165 Hannover (DE); Özüduru, Ahmet, 30165 Hannover (DE); Henze, Eugen, 30165 Hannover (DE); Pagac, Lubomir, 020 01 Puchov (SK)
(74) Vertreter: Continental Corporation

(56) Entgegenhaltungen:
- EP-A1- 3 300 926
- EP-A1- 3 375 634
- DE-A1- 4 300 695
- DE-T2- 60 200 758
- JP-A- 2005 153 813
- JP-A- 2009 227 154
- JP-A- 2015 128 992
- JP-A- 2016 182 927

## Beschreibung

Die Erfindung betrifft einen Fahrzeugluftreifen in Radialbauart mit einem Laufstreifen mit zumindest einer mittleren und/oder schulterseitigen Profilblockreihe, welche durch eine Vielzahl von parallel zueinander verlaufenden Querrillen in Profilblöcke gegliedert ist, wobei sich die Querrillen jeweils aus einem ersten Rillenabschnitt und einem gegenüber diesem zur axialen Richtung stärker geneigten, zweiten Rillenabschnitt zusammensetzen, wobei die Rillenabschnitte - bezogen auf eine Mittellinie der Querrille - miteinander einen stumpfen Winkel einschließen und an einer Knickstelle mit einer Knickaußenseite und einer Knickinnenseite aneinander anschließen, wobei die Knickstelle durch den Anschluss des zweiten Rillenabschnittes an den ersten Rillenabschnitt definiert ist und wobei eine Rillenknicklinie durch den gegenseitigen Anschluss des ersten Rillenabschnittes an den zweiten Rillenabschnitt verläuft, wobei jede Querrille eine knickinnenseitige Rillenflanke und eine knickaußenseitige Rillenflanke aufweist, wobei die knickinnenseitige Rillenflanke jene Rillenflanke ist, bei welcher eine in Draufsicht die Enden der Rillenflanke verbindende Linie komplett außerhalb der Querrille verläuft, wobei eine die beiden Enden der knickaußenseitigen Rillenflanke verbindende Linie in Draufsicht zumindest abschnittsweise über die Querrille verläuft, wobei eine Knickaußenseite der Knickstelle durch den Schnittpunkt der Rillenknicklinie mit der knickaußenseitigen Rillenflanke definiert ist, und wobei eine Knickinnenseite der Knickstelle durch den Schnittpunkt der Rillenknicklinie mit der knickinnenseitigen Rillenflanke definiert ist, wobei die Profilblöcke der zumindest einen mittleren und/oder schulterseitigen Profilblockreihe mit an die Querrillen angrenzenden, im Bereich der Knickaußenseite der Knickstellen ausgebildeten, zur Laufstreifenperipherie offenen Vertiefungen versehen sind, welche in Verlängerung des zweiten Rillenabschnittes und gleichzeitig angrenzend an den ersten Rillenabschnitt ausgebildet sind, wobei unter dem Begriff "im Bereich der Knickaußenseite der Knickstelle einer Querrille ausgebildete Vertiefungen" solche Vertiefungen zu verstehen sind, welche, jeweils in Draufsicht betrachtet, seitlich an die Rillenknicklinie angrenzen oder von der Rillenknicklinie geschnitten werden oder zur Rillenknicklinie einen als Mindestabstand ermittelten Abstand von bis zu 3,0 mm aufweisen.

Ein derartiger Fahrzeugluftreifen ist beispielsweise aus der JP 2015 128 992 A bekannt. Der Laufstreifen des Reifens weist eine seitlich der Reifenäquatorialebene verlaufende, mittlere Profilblockreihe mit Profilblöcken auf, welche durch Querrillen mit zwei unter einem stumpfen Winkel aneinander anschließenden Rillenabschnitten voneinander getrennt sind. Die Rillenabschnitte sind zur axialen Richtung übereinstimmend oder unterschiedlich stark geneigt. An jeder zweiten Querrille ist im Bereich der Knickaußenseite im entsprechenden Profilblock eine zur Laufstreifenperipherie offene Vertiefung ausgebildet.

Ferner ist aus der WO 2016 202 472 A1 ein Fahrzeugluftreifen mit einem Laufstreifen, welcher zwei mittlere, durch eine Umfangsrille voneinander getrennte Profilblockreihen aufweist, bekannt. In den Profilblockreihen verlaufen Querrillen, welche gegenüber der axialen Richtung unter einem Winkel von bis zu 45° geneigt sind und vor der die Profilblockreihen voneinander trennenden Umfangsrille enden. Entlang der Umfangsrille sind die Profilblockreihen mit Vertiefungen versehen, welche mit zunehmender Entfernung von der Umfangsrille kontinuierlich tiefer werden. Zwischen den innerhalb der Profilblockreihen befindlichen Enden der Querrillen und den Vertiefungen können Verbindungsstege ausgebildet sein, welche sich in radialer Richtung auf einem niedrigeren Niveau befinden als die Außenfläche der Profilblöcke, sodass an die Querrille angrenzende Vertiefungen gebildet werden. Die Vertiefungen sollen als "Schneetaschen" wirken, sodass sich beim Fahren auf schneebedeckter Fahrbahn Schnee in den Vertiefungen ansammeln und durch den Effekt der Schnee/Schnee-Reibung die Schneeperformance des Fahrzeugluftreifens verbessert sein soll.

Aus der DE 602 00 758 T2 ist ein Fahrzeugluftreifen mit einem Laufstreifen mit einer blockartig strukturierten mittleren Profilrippe, an welche seitlich je eine schulterseitige Profilblockreihe anschließt, bekannt. In der Profilrippe verlaufen Querrillen, welche sich jeweils aus zwei unter einem stumpfen Winkel aneinander anschließenden Rillenabschnitten zusammensetzen, wobei sowohl die Profilrippe als auch die Querrillen bezüglich der Reifenäquatorialebene symmetrisch ausgeführt sind. Die Rillenabschnitte sind jeweils abschnittsweise mit einer Querschnittsaufweitung versehen, welche in Draufsicht durch einander gegenüberliegende, zueinander konvex gekrümmte Flankenabschnitte der Rillenflanken begrenzt ist. In der Profilrippe ist am gegenseitigen Anschluss der Rillenabschnitte an der Knickaußenseite eine symmetrisch zur Reifenäquatorialebene ausgeführte, in Draufsicht dreieckförmige Vertiefung ausgebildet.

Die JP 2009 227 154 A offenbart einen Fahrzeugluftreifen mit einem Laufstreifen mit einer Profilblockreihe mit Querrillen, welche sich jeweils aus zwei unter einem stumpfen Winkel aneinander einschließenden Rillenabschnitten zusammensetzen. In jedem Rillenabschnitt ist eine die Rillenflanken verbindende lokale Grundanhebung ausgebildet. Zwischen aufeinanderfolgenden Querrillen verlaufen in Umfangsrichtung ausgerichtete Einschnitte, welche an den Knickstellen der Querrillen einmünden.

Aus der EP 3 300 926 A1 ist ein Fahrzeugluftreifen mit einem Laufstreifen mit zwei mittleren Profilblockreihen mit Querrillen bekannt. Die Querrillen verbreitern sich in Richtung zur Laufstreifenschulter und setzen sich jeweils aus zwei miteinander einen stumpfen Winkel einschließenden Rillenabschnitten zusammen. Der Rillenabschnitt, welcher in Richtung Laufstreifenschulter verläuft, ist kürzer ausgeführt als der andere Rillenabschnitt. Am blockinnenseitigen Endabschnitt des längeren Rillenabschnittes ist eine Grundanhebung ausgebildet. Zwischen den in Umfangsrichtung benachbarten Querrillen verlaufen Zusatznuten, welche die Profilblöcke in Blockteile gliedern, sich in Draufsicht über ihre Erstreckung trichterförmig verbreitern und unter einem Winkel von 5° bis 15° zur Umfangsrichtung geneigt sind.

Die DE 43 00 695 A1 offenbart einen Fahrzeugluftreifen mit einem Laufstreifen mit einer mittleren Profilrippe, welche durch Querrillen mit zwei einen stumpfen Winkel einschließenden und an der Reifenäquatorialebene aneinander anschließenden Rillenabschnitten in blockartige Profilstrukturen gegliedert ist. Je eine der Querrillen verläuft über die Reifenäquatorialebene hinaus und verläuft mit einem Endabschnitt in die Profilrippe hinein.

Aus der JP 2005 153 813 A ist ferner eine Fahrzeugluftreifen mit einem Laufstreifen mit einer Profilrippe bekannt, wobei die Profilrippe von Einschnitten durchquert ist, die sich jeweils aus zwei unter einem stumpfen Winkel aneinander anschließenden Einschnittabschnitten zusammensetzen.

Für eine gute Schneetraktion eines Reifens wäre es optimal, möglichst in axialer Richtung orientierte Querrillen im Lauftreifen vorzusehen, da sich Schnee in solchen Querrillen sehr gut halten kann. Derartige Querrillen sind jedoch gegenüber zur axialen Richtung geneigten Querrillen im Hinblick auf die Wasserableiteigenschaften weniger günstig. Es ergibt sich somit ein Zielkonflikt in der Auslegung des Laufstreifenprofils im Hinblick auf die Schneegriffeigenschaften und die Wasserableiteigenschaften, welcher bisher noch nicht zufriedenstellend gelöst ist.

Der Erfindung liegt daher die Aufgabe zugrunde, bei einem Fahrzeugluftreifen der eingangs genannten Art, den zwischen den Schneegriffeigenschaften und den Wasserableiteigenschaften bestehenden Zielkonflikt besser als bisher zu lösen.

Gelöst wird die gestellte Aufgabe erfindungsgemäß dadurch,
dass der Laufstreifen zumindest eine schulterseitige Profilblockreihe aufweist, in welcher der zweite Rillenabschnitt - bezogen auf die Mittellinie der Querrille - zur axialen Richtung unter einem Winkel von 15° bis 30° verläuft und in welcher der erste Rillenabschnitt - bezogen auf die Mittellinie der Querrille - zur axialen Richtung unter einem Winkel von 0° bis 10° verläuft,
und/oder
dass der Laufstreifen zumindest eine mittlere Profilblockreihe aufweist, in welcher der zweite Rillenabschnitt - bezogen auf die Mittellinie der Querrille - zur axialen Richtung unter einem Winkel von 40° bis 50° verläuft und in welcher der erste Rillenabschnitt - bezogen auf die Mittellinie der Querrille - zur axialen Richtung unter einem Winkel von 0° bis 15° verläuft.

Da die Vertiefungen - im Gegensatz zu den aus der WO 2016 202 473 A1 bekannten Vertiefungen- innerhalb der Profilblockreihe, also nicht am seitlichen Rand der Profilblockreihe, ausgebildet sind, ist eine wirkungsvollere "Verzahnung" des sich ansammelnden Schnees und daher eine sehr guter Halt des Schnees in der Querrille sichergestellt. Insbesondere kann der Schnee nicht so leicht aus der Vertiefung herausrutschen, wodurch insbesondere Vorteile im Hinblick auf die Schneegriffeigenschaften erzielt werden. Da die Vertiefungen an Knickstellen ausgebildet sind, kann Wasser auf wirkungsvolle und verwirbelungsarme Weise über die Knickstellen und die Rillenabschnitte zu einer Umfangsrille abgeleitet werden. Der erfindungsgemäße Reifen liefert daher sehr ausgewogene Wasserableit- und Schneegriffeigenschaften, sodass der diesbezüglich bestehende Zielkonflikt besser als bisher gelöst wird.

Gemäß einer bevorzugten Ausführungsvariante sind die Vertiefungen in radialer Richtung durch einen Boden begrenzt, welcher derart unter einem konstanten Winkel zur radialen Richtung geneigt ist, dass die Vertiefungen an der Querrille ihre tiefste Stelle aufweisen. Durch diese Maßnahme wird einerseits beim Fahren auf nasser Fahrbahn eine zumindest weitgehend verwirbelungsfreie Wasserableitung von der Vertiefung in die Querrille ermöglicht und andererseits wird beim Fahren auf schneebedeckter Fahrbahn der in den Vertiefungen aufgenommene Schnee wirkungsvoll verdichtet, wodurch die Traktionseigenschaften auf Schnee verbessert werden.

Gemäß einer weiteren bevorzugten Ausführungsvariante weisen die Vertiefungen an der jeweiligen Querrille an ihrer tiefsten Stelle eine mit der Querrille übereinstimmende Tiefe auf. Diese Maßnahme trägt vor allem zu einer verwirbelungsarmen Wasserableitung bei.

Für ausgewogene Schneegriff- und Wasserableiteigenschaften ist es vorteilhaft, wenn die Vertiefungen an der jeweiligen Querrille eine Breite von 100% bis 200%, insbesondere von 150% bis 170%, der Breite der Querrille aufweisen.

Besonders vorteilhaft ist es, wenn die Vertiefungen jeweils zwei aneinander anschließende und zur Querrille verlaufende Begrenzungsflächen aufweisen, welche in Draufsicht einen

Winkel von 90° ± 10°, insbesondere von 90° ± 5°, einschließen. In solche Vertiefungen wird Schnee besonders gut "hineingedrückt" und gehalten.

Gemäß einer weiteren bevorzugten Variante weisen die Vertiefungen Begrenzungsflächen auf, welche, im Querschnitt betrachtet, zur radialen Richtung unter einem Winkel von 0° bis 7°, insbesondere von 2° bis 5°, verlaufen. Derart gestaltete Begrenzungsflächen tragen ebenfalls zu einer guten Verdichtung von Schnee in den Vertiefungen bei.

Ferner ist es vorteilhaft, wenn eine der Begrenzungsflächen ausgehend von der Knickstelle, an welcher die Rillenabschnitte aneinander anschließen, in Fortsetzung einer Rillenflanke verläuft. Diese Maßnahme begünstigt insbesondere die Wasserableiteigenschaften.

Eine weitere bevorzugte Ausführungsvariante, bei welcher der Laufstreifen zumindest eine mittlere Profilblockreihe aufweist, welche durch eine Vielzahl von parallel zueinander verlaufenden Querrillen in Profilblöcke gegliedert ist, ist dadurch gekennzeichnet, dass der zweite Rillenabschnitt der Querrillen eine Erstreckungslänge von 45% bis 65% der Rillenlänge der Querrille aufweist, wobei die Erstreckungslänge und die Rillenlänge jeweils entlang der Mittellinie der Querrille ermittelt sind.

Eine weitere, für die Lösung des Zielkonfliktes zwischen den Schneegriffeigenschaften und den Wasserableiteigenschaften vorteilhafte Maßnahme besteht darin, dass die Vertiefungen in Draufsicht in Form eines Dreiecks ausgeführt sind, wobei die längste Seite des Dreiecks an der Querrille liegt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eines Laufstreifens eines Fahrzeugluftreifen mit einer Ausführungsvariante gemäß der Erfindung,
Fig. 2 einen Schnitt entlang der Linie II-II der Fig. 1,
Fig. 3 einen Schnitt entlang der Linie III-III der Fig. 1,
Fig. 4 einen Schnitt entlang der Linie IV-IV der Fig. 1,
Fig. 5 einen Schnitt entlang der Linie V-V der Fig. 1 und
Fig. 6 einen Schnitt entlang der Linie VI-VI der Fig. 1.

Erfindungsgemäß ausgeführte Fahrzeugluftreifen sind Reifen in Radialbauart für Personenkraftwagen, Vans oder Light-Trucks, wobei die Reifen als Winterreifen vorgesehen sind.

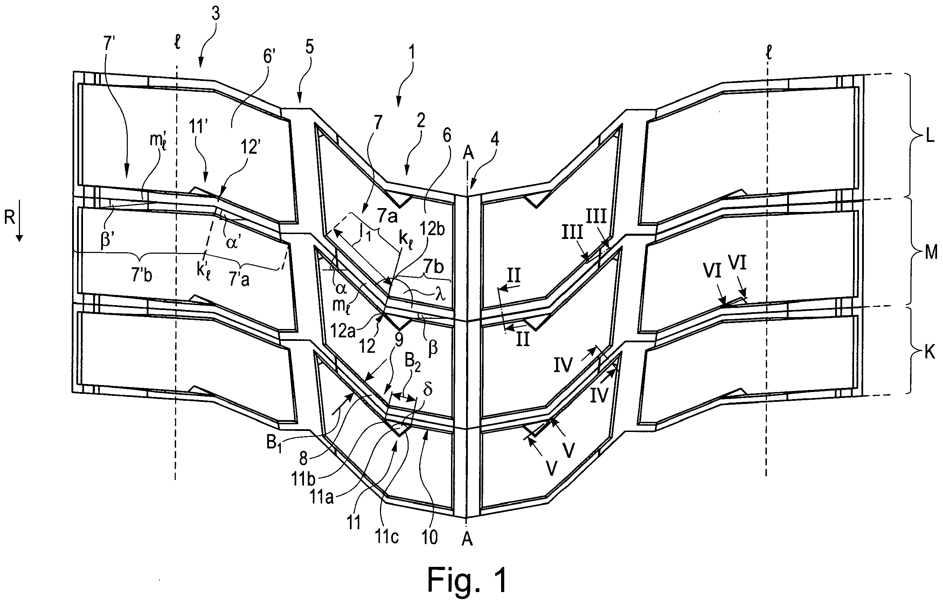

Der in Fig. 1 exemplarisch gezeigte Ausschnitt eines Laufstreifens umfasst drei Pitches L, M, K mit drei unterschiedlichen, in Fig. 1 nicht bezeichneten Umfangslängen. Der Laufstreifen 1 ist beim gezeigten Ausführungsbeispiel laufrichtungsgebunden ausgeführt, wobei der Fahrzeugluftreifen derart am Fahrzeug zu montieren ist, dass er die in Fig. 1 durch den am linken Rand eingezeichneten Pfeil R symbolisierte Abrollrichtung bei Vorwärtsfahrt aufweist. Die Äquatorialebene ist durch eine gestrichelte Linie A-A gekennzeichnet. Die seitlichen Ränder des bodenberührenden Teiles des Laufstreifens, welcher dem statisch ermittelten Footprint gemäß E.T.R.T.O.-Standards (Last bei 70 % der maximalen Tragfähigkeit bei einem Innendruck von 85 % nach E.T.R.T.O.-Norm) entspricht, sind durch gestrichelte Linien 1 angedeutet.

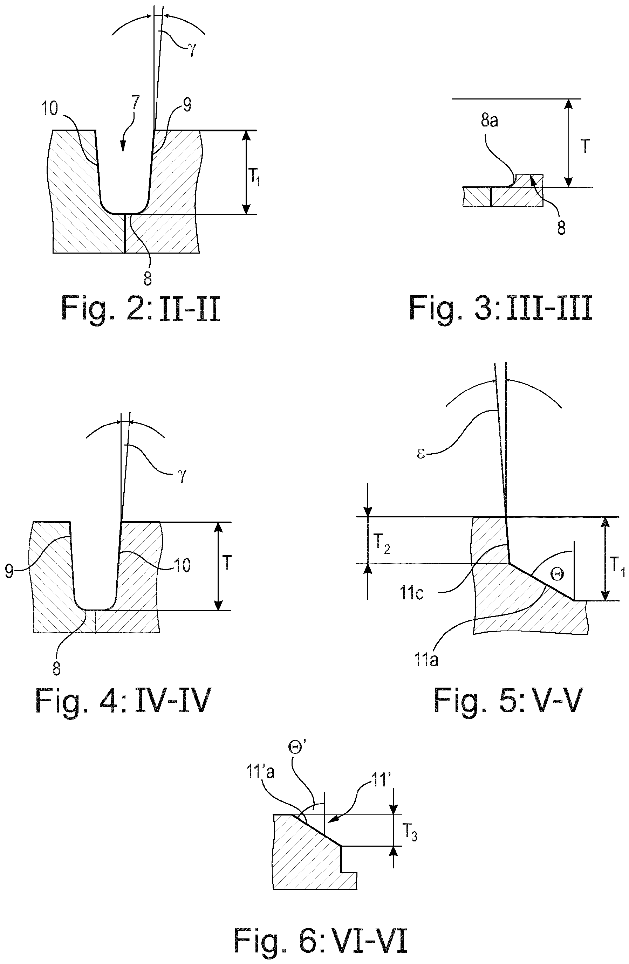

Der Laufstreifen 1 weist in jeder Laufstreifenhälfte eine in Umfangsrichtung umlaufende mittlere Profilblockreihe 2 und eine in der Reifenschulter verlaufende schulterseitige Profilblockreihe 3 auf. Die in der einen Laufstreifenhälfte verlaufende mittlere Profilblockreihe 2 ist zu der in der anderen Laufstreifenhälfte verlaufenden mittleren Profilblockreihe 2 durch eine in Draufsicht gerade sowie entlang der Äquatorialebene verlaufende Umfangsrille 4 getrennt. Die Profilblockreihen 2 und 3 in der einen Laufstreifenhälfte sind zu den Profilblockreihen 2 und 3 in der anderen Laufstreifenhälfte bezüglich der Äquatorialebene symmetrisch ausgeführt. In jeder Laufstreifenhälfte ist die mittlere Profilblockreihe 2 durch eine beim gezeigten Ausführungsbeispiel in Draufsicht sägezahnartig verlaufende Umfangsrille 5 von der schulterseitigen Profilblockreihe 3 getrennt. Die Umfangsrillen 4, 5 sind vorzugsweise in der jeweils vorgesehene Profiltiefe T (angedeutet in Fig. 3 und Fig. 4) ausgeführt, welche für den bevorzugten Reifentyp üblicherweise 6,5 mm bis 11,0 mm beträgt.

Die weitere Ausgestaltung der mittleren Profilblockreihen 2 und der schulterseitigen Profilblockreihen 3 wird nachfolgend jeweils anhand einer einzelnen Profilblockreihe 2 bzw. 3 erläutert.

Die mittlere Profilblockreihe 2 setzt sich aus über den Umfang des Laufstreifens aufeinanderfolgenden Profilblöcken 6 zusammen, welche durch in die Umfangsrillen 4, 5 einmündende, in Draufsicht jeweils eine Kickstelle 12 aufweisende und parallel zueinander verlaufende Querrillen 7 getrennt sind.

Jede Querrille 7 setzt sich aus einem in die jeweilige sägezahnartig verlaufende Umfangsrille 5 einmündenden, zur axialen Richtung stärker geneigten Rillenabschnitt 7a und einem in die zentrale Umfangsrille 4 einmündenden, gegenüber dem Rillenabschnitt 7a zur axialen Richtung geringer geneigten Rillenabschnitt 7b zusammen, wobei der Rillenabschnitt 7a an den Rillenabschnitt 7b an der erwähnten Knickstelle 12 anschließt. Die Knickstelle 12 ist daher durch den Anschluss des Rillenabschnittes 7a an den Rillenabschnitt 7b definiert und ist in Fig. 1 durch eine gestrichelte Rillenknicklinie k₁ gekennzeichnet.

In Fig. 1 ist ferner im Bereich einer Querrille 7 eine in Rillenlaufrichtung ausgerichtete Mittellinie m₁, welche mit einer Pitchgrenze zusammenfällt, gekennzeichnet. Der Rillenabschnitt 7a und der Rillenabschnitt 7b schließen miteinander - bezogen auf die Mittellinie m₁ - einen stumpfen Winkel λ ein. Der zur axialen Richtung stärker geneigte Rillenabschnitt 7a verläuft in Draufsicht gerade sowie - bezogen auf die Mittellinie m₁ der Querrille 7 - zur axialen Richtung unter einem Winkel α von 40° bis 50°. Der Rillenabschnitt 7a weist eine Erstreckungslänge l₁ von insbesondere 45% bis 65% der Rillenlänge der Querrille 7 auf, wobei die Erstreckungslänge l₁ und die Rillenlänge jeweils entlang der Mittellinie m₁ ermittelt sind. Der zur axialen Richtung geringer geneigte Rillenabschnitt 7b verläuft in Draufsicht ebenfalls gerade sowie - bezogen auf die Mittellinie m₁ - zur axialen Richtung unter einem Winkel β von 0° bis zu 15°, insbesondere von bis zu 10°, kann daher auch in axialer Richtung verlaufen.

Die Querrille 7 weist einen sich über die gesamte Querrille 7 und daher über den Rillenabschnitt 7a und den Rillenabschnitt 7b erstreckenden Rillengrund 8 auf, welcher beim gezeigten Ausführungsbeispiel, im Querschnitt betrachtet, flach U-förmig ausgeführt ist (Fig. 2). Beim gezeigten Ausführungsbeispiel weist die Querrille 7 ferner im zur axialen Richtung geringer geneigten Rillenabschnitt 7b sowie zumindest im Großteil des zur axialen Richtung stärker geneigten Rillenabschnittes 7a in radialer Richtung eine konstante Tiefe T₁ (Fig. 2) auf, welche insbesondere bis zu 1,5 mm geringer ist als die jeweils vorgesehene Profiltiefe T (Fig. 3, Fig. 4). Der zur axialen Richtung stärker geneigte Rillenabschnitt 7a wird im Anschlussbereich zur entsprechenden sagezahnförmig verlaufenden Umfangsrille 5 in einem Abstand vor der Umfangsrille 5 über einen auf die Profiltiefe T kontinuierlich abfallenden Grundabschnitt 8a des Rillengrundes 8 tiefer (Fig. 3 in Verbindung mit Fig. 4).

Die Querrille 7 weist eine knickinnenseitige Rillenflanke 9 und eine knickaußenseitige Rillenflanke 10 auf. Die knickinnenseitige Rillenflanke 9 ist dabei jene Rillenflanke, bei welcher eine die Enden der Rillenflanke verbindende Linie komplett außerhalb der Querrille 7 verläuft. Eine die beiden Enden der knickaußenseitigen Rillenflanke 10 verbindende Linie verläuft in Draufsicht zumindest abschnittsweise über die Querrille 7. In Analogie hierzu weist die Knickstelle 12 eine Knickaußenseite 12a und eine Knickinnenseite 12b auf, wobei die Knickaußenseite 12a durch den Schnittpunkt der Rillenknicklinie k₁ mit der knickaußenseitigen Rillenflanke 10 und die Knickinnenseite 12b durch den Schnittpunkt der Rillenknicklinie k₁ mit der knickinnenseitigen Rillenflanke 10 definiert ist. Beim gezeigten Ausführungsbeispiel sind die Querrillen 7 derart orientiert, dass die Knickaußenseite 12a vor der Knickinnenseite 12b in die Bodenaufstandsfläche eintritt.

Die Rillenflanken 9, 10 verlaufen, im Querschnitt betrachtet, zur radialen Richtung unter einem Winkel γ (Fig. 2, Fig. 4) von 0° bis vorzugsweise maximal 5°. An der Laufstreifenperipherie weist die Querrille 7 zwischen den radial äußeren Enden der Rillenflanken 9, 10 eine Breite B₁ von 6,0 mm bis 12,0 mm auf.

Jeder Profilblock 6 ist mit einem in Draufsicht an die Knickstelle 12 und gleichzeitig an den geringer geneigten Rillenabschnitt 7b angrenzenden, zur Laufstreifenperipherie offenen Vertiefung 11 versehen. Die Vertiefung 11 erstreckt sich beim gezeigten Ausführungsbeispiel in Draufsicht in Fortsetzung des stärker geneigten Rillenabschnittes 7a und ist beispielsweise in Draufsicht in Form eines rechtwinkeligen Dreiecks ausgeführt, wobei die Hypotenuse des Dreiecks am Rillenabschnitt 7b liegt. Die Vertiefung 11 ist in radialer Richtung durch einen Boden 11a sowie ferner durch zwei Begrenzungsflächen 11b, 11c begrenzt. Die Begrenzungsfläche 11b verläuft in Draufsicht ebenfalls unter dem bereits erwähnten Winkel α, geht an der Kickstelle 12 in den im stärker geneigten Rillenabschnitt 7a verlaufenden Teil der knickaußenseitigen Rillenflanke 10 über und weist, im Querschnitt betrachtet, eine mit der Rillenflanke 10 übereinstimmende Neigung gegenüber der radialen Richtung auf, sodass sie ebenfalls unter dem bereits erwähnten Winkel γ (Fig. 2, Fig. 4) verläuft. Die Begrenzungsfläche 11c schließt an der Begrenzungsfläche 11b an und endet am schwächer geneigten Rillenabschnitt 7b an der Rillenflanke 10. Die Begrenzungsfläche 11b und die Begrenzungsfläche 11c schließen in Draufsicht an der Laufstreifenperipherie einen Winkel δ von 90° ± 10°, insbesondere von 90° ± 5°, beim gezeigten Ausführungsbeispiel von ca. 90°, ein. Wie Fig. 5 zeigt, verläuft die am schwächer geneigten Rillenabschnitt 7b endende Begrenzungsfläche 11c, im Querschnitt betrachtet, zur radialen Richtung unter einem Winkel ε von 0° bis 7°, insbesondere von 2° bis 5°, und reicht in radialer Richtung bis in eine Tiefe T₂ von 4,0 mm bis 6,0 mm. Der Boden 11a der Vertiefung 11 ist gegenüber der radialen Richtung derart unter einem konstanten Winkel θ 45° bis 75°, insbesondere von 55° bis 65°, geneigt, dass er ausgehend von der Begrenzungsfläche 11c entlang der Begrenzungsfläche 11b (Fig. 1) ins radial Innere bis auf die bereits erwähnte Tiefe T₁ der Querrille 7 abfällt. Wie Fig. 1 zeigt, weist die Vertiefung 11 am Rillenabschnitt 7b eine an der Laufstreifenperipherie ermittelte Breite B₂ auf, welche 100% bis 200%, insbesondere 150% bis 170%, der Breite B₁ der Querrille 7 beträgt.

In jeder schulterseitigen Profilblockreihe 3 verläuft eine Vielzahl von parallel zueinander ausgerichteten, in die jeweilige Umfangsrille 5 einmündenden Querrillen 7', welche Profilblöcke 6' voneinander trennen. Die Querrillen 7' sind analog zu den bereits beschriebenen Querrillen 7 in den mittleren Profilblockreihen 2 ausgeführt, wobei sie - bezogen auf die Abrollrichtung (Pfeil R) - in entgegensetzte Richtung zu den Querrillen 7 geknickt sind. Jede Querrille 7' setzt sich aus einem zur axialen Richtung stärker geneigten Rillenabschnitt 7'a und einem zur axialen Richtung geringer geneigten Rillenabschnitt 7'b zusammen, welche an einer durch eine Rillenknicklinie k₁' gekennzeichneten Knickstelle 12' aneinander anschließen. Der stärker geneigte Rillenabschnitt 7'a mündet in die Umfangsrille 5, befindet sich komplett innerhalb der Bodenaufstandsfläche und verläuft - bezogen auf eine Mittellinie m₁' der Querrille 7' (fällt mit der Pitchgrenze zusammen)-zur axialen Richtung unter einem Winkel α' von 15° bis 30°. Der geringer geneigte Rillenabschnitt 7'b läuft über den seitlichen Rand der Bodenaufstandsfläche hinaus sowie - bezogen auf die Mittellinie m₁' - zur axialen Richtung unter einem Winkel β' 0° bis 10°.

Jeder Profilblock 6' ist mit einer in Draufsicht an die Knickstelle 12' und gleichzeitig an den schwächer geneigten Rillenabschnitt 7'b angrenzenden, zur Laufstreifenperipherie offenen Vertiefung 11' versehen, welche sich in Fortsetzung des stärker geneigten Rillenabschnittes 7'a erstreckt und beim gezeigten Ausführungsbeispiel in Draufsicht in Form eines rechtwinkeligen Dreieckes ausgeführt ist, wobei die Hypotenuse des Dreiecks am Rillenabschnitt 7'b liegt.

Wie Fig. 6 zeigt, ist die Vertiefung 11' in radialer Richtung durch einen Boden 11'a begrenzt, welcher, im Querschnitt betrachtet, zur radialen Richtung unter einem Winkel θ' von 45° bis 75°, insbesondere von 55° bis 65°, geneigt ist, bis zur Außenfläche des jeweiligen Profilblockes 6' verläuft und in radialer Richtung bis in eine Tiefe T₃ reicht, welche insbesondere bis zu 5,5 mm geringer ist als die jeweils vorgesehene Profiltiefe T (Fig. 3, Fig. 4).

Gemäß der Erfindung sind Vertiefungen in Profilblöcken im Bereich der Knickaußenseite der Knickstelle einer Querrille ausgebildet. Unter "im Bereich der Knickaußenseite der Knickstelle einer Querrille ausgebildeten Vertiefungen" sind dabei solche zu verstehen, welche seitlich an die Rillenknicklinie k₁, k₁' angrenzen (Fig. 1) oder von der Rillenknicklinie k₁, k₁ in Draufsicht geschnitten werden oder zur Rillenknicklinie k₁, k₁ einen als Mindestabstand ermitteln Abstand von bis zu 3,0 mm aufweisen.

Die Erfindung ist auf das beschriebene Ausführungsbeispiel nicht beschränkt.

Der Laufstreifen kann auch nicht laufrichtungsgebunden ausgeführt sein. Die Profilblöcke können mit einer Vielzahl von insbesondere bekannter Weise ausgeführten Einschnitten, versehen sein. Die Umfangsrillen können einen vom beschriebenen Verlauf abweichenden Verlauf aufweisen, wobei die Umfangsrillen beispielsweise in Draufsicht wellen- oder zickzack-förmig verlaufen können.

### Bezugszeichenliste

- 1: Laufstreifen
- 2: mittlere Profilblockreihe
- 3: schulterseitige Profilblockreihe
- 4: Umfangsrille
- 5: Umfangsrille
- 6, 6': Profilblock
- 7, 7': Querrille
- 7a, 7b, 7'a, 7'b: Rillenabschnitt
- 8: Rillengrund
- 8a: Grundabschnitt
- 9: Rillenflanke
- 10: Rillenflanke
- 11, 11': Vertiefung
- 11a, 11'a: Boden
- 11b: Begrenzungsfläche
- 11c: Begrenzungsfläche
- 12, 12': Knickstelle
- 12a: Knickaußenseite
- 12b: Knickinnenseite
- A-A: Linie (Äquatorialebene)
- B₁, B₂: Breite
- k₁, k₁': Rillenknicklinie
- 1: Linie (seitlicher Rand der Bodenaufstandsfläche)
- l₁: Erstreckungslänge
- L, M, K: Pitch
- m₁, m₁': Mittellinie
- R: Pfeil (Abrollrichtung)
- T₁, T₂, T₃: Tiefe
- T: Profiltiefe
- α, β, α', β', γ, δ, ε, θ, θ', λ: Winkel

## Patentansprüche

1. Fahrzeugluftreifen in Radialbauart mit einem Laufstreifen mit zumindest einer mittleren und/oder schulterseitigen Profilblockreihe (2, 3), welche durch eine Vielzahl von parallel zueinander verlaufenden Querrillen (7, 7') in Profilblöcke (6, 6') gegliedert ist, wobei sich die Querrillen (7, 7') jeweils aus einem ersten Rillenabschnitt (7b, 7b') und einem gegenüber diesem zur axialen Richtung stärker geneigten, zweiten Rillenabschnitt (7a, 7a') zusammensetzen,
wobei die Rillenabschnitte (7a, 7b, 7'a, 7'b) - bezogen auf eine Mittellinie (m₁, m₁') der Querrille (7, 7') - miteinander einen stumpfen Winkel (λ) einschließen und an einer Knickstelle (12, 12') mit einer Knickaußenseite (12a) und einer Knickinnenseite (12b) aneinander anschließen, wobei die Knickstelle (12, 12') durch den Anschluss des zweiten Rillenabschnittes (7a, 7a') an den ersten Rillenabschnitt (7b, 7b') definiert ist und wobei eine Rillenknicklinie (k₁, k₁') durch den gegenseitigen Anschluss des ersten Rillenabschnittes (7a, 7a') an den zweiten Rillenabschnitt (7b, 7b') verläuft,
wobei jede Querrille (7, 7') eine knickinnenseitige Rillenflanke (9) und eine knickaußenseitige Rillenflanke (10) aufweist,
wobei die knickinnenseitige Rillenflanke (9) jene Rillenflanke (9) ist, bei welcher eine in Draufsicht die Enden der Rillenflanke (9) verbindende Linie komplett außerhalb der Querrille (7, 7') verläuft,
wobei eine die beiden Enden der knickaußenseitigen Rillenflanke (10) verbindende Linie in Draufsicht zumindest abschnittsweise über die Querrille (7, 7') verläuft,
wobei eine Knickaußenseite (12a) der Knickstelle (12) durch den Schnittpunkt der Rillenknicklinie (k₁, k₁') mit der knickaußenseitigen Rillenflanke (10) definiert ist, und wobei eine Knickinnenseite (12b) der Knickstelle (12) durch den Schnittpunkt der Rillenknicklinie (k₁, k₁') mit der knickinnenseitigen Rillenflanke (9) definiert ist,
wobei die Profilblöcke (6, 6') der zumindest einen mittleren und/oder schulterseitigen Profilblockreihe (2, 3) mit an die Querrillen (7, 7') angrenzenden, im Bereich der Knickaußenseite (12a) der Knickstellen (12, 12') ausgebildeten, zur Laufstreifenperipherie offenen Vertiefungen (11, 11') versehen sind, welche in Verlängerung des zweiten Rillenabschnittes (7a, 7'a) und gleichzeitig angrenzend an den ersten Rillenabschnitt (7b, 7'b) ausgebildet sind,
wobei unter dem Begriff "im Bereich der Knickaußenseite (12a) der Knickstelle (12, 12') einer Querrille (7, 7') ausgebildete Vertiefungen (11, 11')" solche Vertiefungen (11, 11') zu verstehen sind, welche, jeweils in Draufsicht betrachtet, seitlich an die Rillenknicklinie (k₁, k₁') angrenzen oder von der Rillenknicklinie (k₁, k₁') geschnitten werden oder zur Rillenknicklinie (k₁, k₁') einen als Mindestabstand ermittelten Abstand von bis zu 3,0 mm aufweisen, **dadurch gekennzeichnet,**
**dass** der Laufstreifen zumindest eine schulterseitige Profilblockreihe (3) aufweist, in welcher der zweite Rillenabschnitt (7'a) - bezogen auf die Mittellinie (m₁') der Querrille (7') - zur axialen Richtung unter einem Winkel (α') von 15° bis 30° verläuft und in welcher der erste Rillenabschnitt (7'b) - bezogen auf die Mittellinie (m₁') der Querrille (7') - zur axialen Richtung unter einem Winkel (β') von 0° bis 10° verläuft,
und/oder
**dass** der Laufstreifen zumindest eine mittlere Profilblockreihe (2) aufweist, in welcher der zweite Rillenabschnitt (7a) - bezogen auf die Mittellinie (m₁) der Querrille (7) - zur axialen Richtung unter einem Winkel (α) von 40° bis 50° verläuft und in welcher der erste Rillenabschnitt (7b) - bezogen auf die Mittellinie (m₁) der Querrille (7) - zur axialen Richtung unter einem Winkel (ß) von 0° bis 15° verläuft.

2. Fahrzeugluftreifen nach Anspruch 1, **dadurch gekennzeichnet, dass** die Vertiefungen (11, 11') in radialer Richtung durch einen Boden (11a, 11'a) begrenzt sind, welcher derart unter einem konstanten Winkel (θ) zur radialen Richtung geneigt ist, dass die Vertiefungen (11, 11') an der Querrille (7, 7') ihre tiefste Stelle aufweisen.

3. Fahrzeugluftreifen nach Anspruch 1 oder 2, **dadurch gekennzeichnet, dass** die Vertiefungen (11) an der jeweiligen Querrille (7) an ihrer tiefsten Stelle eine mit der Querrille (7) übereinstimmende Tiefe (T₁) aufweisen.

4. Fahrzeugluftreifen nach einem der Ansprüche 1 bis 3, **dadurch gekennzeichnet, dass** die Vertiefungen (11, 11') an der jeweiligen Querrille (7, 7') eine an der Laufstreifenperipherie ermittelte Breite (B₂) von 100% bis 200%, insbesondere von 150% bis 170%, der Breite (B₁) der Querrille (7, 7') aufweisen.

5. Fahrzeugluftreifen nach nach einem der Ansprüche 1 bis 4, **dadurch gekennzeichnet, dass** die Vertiefungen (11, 11') jeweils zwei aneinander anschließende und zur Querrille (7, 7') verlaufende Begrenzungsflächen (11b, 11c) aufweisen, welche in Draufsicht einen Winkel (δ) von 90° ± 10°, insbesondere von 90° ± 5°, einschließen.

6. Fahrzeugluftreifen nach einem der Ansprüche 1 bis 5, **dadurch gekennzeichnet, dass** die Vertiefungen (11, 11') Begrenzungsflächen (11b, 11c) aufweisen, welche, im Querschnitt betrachtet, zur radialen Richtung unter einem Winkel (γ, ε) von 0° bis 7°, insbesondere von 2° bis 5°, verlaufen.

7. Fahrzeugluftreifen nach Anspruch 5 oder 6, **dadurch gekennzeichnet, dass** eine der Begrenzungsflächen (11b) ausgehend von der Knickstelle (12, 12'), an welcher die Rillenabschnitte (7a, 7b) aneinander anschließen, in Fortsetzung einer Rillenflanke (10) verläuft.

8. Fahrzeugluftreifen nach einem der Ansprüche 1 bis 7, wobei der Laufstreifen zumindest eine mittlere Profilblockreihe (2) aufweist, welche durch eine Vielzahl von parallel zueinander verlaufenden Querrillen (7) in Profilblöcke (6) gegliedert ist, **dadurch gekennzeichnet, dass** der zweite Rillenabschnitt (7a) der Querrillen (7) eine Erstreckungslänge (l₁) von 45% bis 65% der Rillenlänge der Querrille (7) aufweist, wobei die Erstreckungslänge (l₁) und die Rillenlänge jeweils entlang der Mittellinie (m₁) der Querrille (7) ermittelt sind.

9. Fahrzeugluftreifen nach einem der Ansprüche 1 bis 8, **dadurch gekennzeichnet, dass** die Vertiefungen (11, 11') in Draufsicht in Form eines Dreiecks ausgeführt sind, wobei die längste Seite des Dreiecks an der Querrille (7, 7') liegt.

## Claims

1. Pneumatic vehicle tyre of radial construction, having a tread with at least one middle and/or shoulder-side profile block row (2, 3) which is divided into profile blocks (6, 6') by a multiplicity of transverse channels (7, 7') running parallel to one another, wherein the transverse channels (7, 7') are each made up of a first channel section (7b, 7b') and of a second channel section (7a, 7a') that is more steeply inclined with respect to the axial direction than said first channel section (7b, 7b'),
wherein - with regard to a centre line (m₁, m₁') of the transverse channel (7, 7') - the channel sections (7a, 7b, 7'a, 7'b) enclose an obtuse angle (λ) with one another and adjoin one another at a bend point (12, 12') with a bend outer side (12a) and a bend inner side (12b), wherein the bend point (12, 12') is defined by the connection of the second channel section (7a, 7a') to the first channel section (7b, 7b'), and wherein a channel bend line (k₁, k₁') runs through the mutual connection of the first channel section (7a, 7a') to the second channel section (7b, 7b'),
wherein each transverse channel (7, 7') has a channel flank (9) at the inside of the bend and a channel flank (10) at the outside of the bend,
wherein the channel flank (9) at the inside of the bend is that channel flank (9) in the case of which a line that connects the ends of the channel flank (9) in a plan view runs entirely outside the transverse channel (7, 7'),
wherein a line that connects the two ends of the channel flank (10) at the outside of the bend runs at least in certain sections over the transverse channel (7, 7') in a plan view,
wherein a bend outer side (12a) of the bend point (12) is defined by the intersection point of the channel bend line (k₁, k₁') with the channel flank (10) at the outside of the bend, and wherein a bend inner side (12b) of the bend point (12) is defined by the intersection point of the channel bend line (k₁, k₁') with the channel flank (9) at the inside of the bend,
wherein the profile blocks (6, 6') of the at least one middle and/or shoulder-side profile block row (2, 3) are equipped with depressions (11, 11') which adjoin the transverse channels (7, 7') and which are formed in the region of the bend outer side (12a) of the bend points (12, 12') and which are open to the tread periphery and which are formed as an elongation of the second channel section (7a, 7'a) and at the same time so as to adjoin the first channel section (7b, 7'b),
wherein the expression "depressions (11, 11') formed in the region of the bend outer side (12a) of the bend point (12, 12') of a transverse channel (7, 7')" is to be understood to mean depressions (11, 11') which, in each case as seen in a plan view, laterally adjoin the channel bend line (k₁, k₁') or are intersected by the channel bend line (k₁, k₁') or have a spacing, measured as a minimum spacing, of up to 3.0 mm to the channel bend line (k₁, k₁'),
**characterized**
**in that** the tread has at least one shoulder-side profile block row (3) in which - with regard to the centre line (m₁') of the transverse channel (7') - the second channel section (7'a) runs at an angle (α') of 15° to 30° with respect to the axial direction and in which - with regard to the centre line (m₁') of the transverse channel (7') - the first channel section (7'b) runs at an angle (β') of 0° to 10° with respect to the axial direction,
and/or
**in that** the tread has at least one middle profile block row (2) in which - with regard to the centre line (m₁) of the transverse channel (7) - the second channel section (7a) runs at an angle (α) of 40° to 50° with respect to the axial direction and in which - with regard to the centre line (m₁) of the transverse channel (7) - the first channel section (7b) runs at an angle (β) of 0° to 15° with respect to the axial direction.

2. Pneumatic vehicle tyre according to Claim 1, **characterized in that** the depressions (11, 11') are delimited in a radial direction by a base (11a, 11'a) which is inclined at a constant angle (θ) with respect to the radial direction such that the depressions (11, 11') have their deepest point at the transverse channel (7, 7').

3. Pneumatic vehicle tyre according to Claim 1 or 2, **characterized in that** the depressions (11) have, at their deepest point at the respective transverse channel (7), a depth (T₁) that corresponds to the transverse channel (7) .

4. Pneumatic vehicle tyre according to any one of Claims 1 to 3, **characterized in that** the depressions (11, 11') have, at the respective transverse channel (7, 7'), a width (B₂) measured at the tread periphery of 100% to 200%, in particular of 150% to 170%, of the width (B₁) of the transverse channel (7, 7').

5. Pneumatic vehicle tyre according to any one of Claims 1 to 4, **characterized in that** the depressions (11, 11') each have two delimiting surfaces (11b, 11c) which adjoin one another and which run to the transverse channel (7, 7') and which, in a plan view, enclose an angle (δ) of 90° ± 10°, in particular of 90° ± 5°.

6. Pneumatic vehicle tyre according to any one of Claims 1 to 5, **characterized in that** the depressions (11, 11') have delimiting surfaces (11b, 11c) which, as seen in cross section, run at an angle (γ, ε) of 0° to 7°, in particular of 2° to 5°, with respect to the radial direction.

7. Pneumatic vehicle tyre according to Claim 5 or 6, **characterized in that** one of the delimiting surfaces (11b) runs, proceeding from the bend point (12, 12') at which the channel sections (7a, 7b) adjoin one another, as a continuation of one channel flank (10).

8. Pneumatic vehicle tyre according to any one of Claims 1 to 7, wherein the tread has at least one middle profile block row (2) which is divided into profile blocks (6) by a multiplicity of transverse channels (7) running parallel to one another, **characterized in that** the second channel section (7a) of the transverse channels (7) has an extent length (l₁) of 45% to 65% of the channel length of the transverse channel (7), wherein the extent length (l₁) and the channel length are each measured along the centre line (m₁) of the transverse channel (7).

9. Pneumatic vehicle tyre according to any one of Claims 1 to 8, **characterized in that** the depressions (11, 11') are, in a plan view, designed in the shape of a triangle, wherein the longest side of the triangle lies at the transverse channel (7, 7').

## Revendications

1. Pneumatique de véhicule de construction radiale muni d'une bande de roulement munie d'au moins une rangée de blocs profilés centrale et/ou côté épaulement (2, 3), qui est divisée en blocs profilés (6, 6') par une pluralité de rainures transversales (7, 7') s'étendant parallèlement les unes aux autres, les rainures transversales (7, 7') se composant chacune d'une première section de rainure (7b, 7b') et d'une deuxième section de rainure (7a, 7a'), plus fortement inclinée que celle-ci par rapport à la direction axiale,
les sections de rainure (7a, 7b, 7'a, 7'b) formant l'une avec l'autre, par rapport à une ligne centrale (m₁, m₁') des rainures transversales (7, 7'), un angle obtus (À) et étant raccordées l'une à l'autre au niveau d'un emplacement de coude (12, 12') présentant un côté extérieur de coude (12a) et un côté intérieur de coude (12b), l'emplacement de coude (12, 12') étant défini par le raccordement de la deuxième section de rainure (7a, 7a') à la première section de rainure (7b, 7b'), et une ligne de coude de rainure (k₁, k₁') s'étendant à travers le raccordement mutuel de la première section de rainure (7a, 7a') à la deuxième section de rainure (7b, 7b'),
chaque rainure transversale (7, 7') présentant un flanc de rainure côté intérieur du coude (9) et un flanc de rainure côté extérieur du coude (10),
le flanc de rainure côté intérieur du coude (9) étant le flanc de rainure (9) pour lequel une ligne reliant en vue de dessus les extrémités du flanc de rainure (9) s'étend complètement à l'extérieur de la rainure transversale (7, 7'),
une ligne reliant les deux extrémités du flanc de rainure côté extérieur du coude (10) s'étendant en vue de dessus au moins en sections par l'intermédiaire de la rainure transversale (7, 7'),
un côté extérieur de coude (12a) de l'emplacement de coude (12) étant défini par le point de coupure de la ligne de coude de rainure (k₁, k₁') avec le flanc de rainure côté extérieur de coude (10), et un côté intérieur de coude (12b) de l'emplacement de coude (12) étant défini par le point de coupure de la ligne de coude de rainure (k₁, k₁') avec le flanc de rainure côté intérieur de coude (9),
les blocs profilés (6, 6') de l'au moins une rangée de blocs profilés centrale et/ou côté épaulement (2, 3) étant munis de creux (11, 11') adjacents aux rainures transversales (7, 7'), formés dans la zone du côté extérieur de coude (12a) des emplacements de coude (12, 12'), ouverts vers la périphérie de bande de roulement, qui sont formés dans le prolongement de la deuxième section de rainure (7a, 7'a) et simultanément adjacents à la première section de rainure (7b, 7'b), l'expression « creux (11, 11') formés dans la zone du côté extérieur de coude (12a) de l'emplacement de coude (12, 12') d'une rainure transversale (7, 7') » signifiant des creux (11, 11') qui, à chaque fois en vue de dessus, sont adjacents latéralement à la ligne de coude de rainure (k₁, k₁') ou sont coupés par la ligne de coude de rainure (k₁, k₁') ou présentent une distance de jusqu'à 3,0 mm déterminée comme distance minimale par rapport à la ligne de coude de rainure (k₁, k₁'),
**caractérisé en ce que**
la bande de roulement comprend au moins une rangée de blocs profilés côté épaulement (3), dans laquelle la deuxième section de rainure (7'a) s'étend, par rapport à la ligne centrale (m₁') de la rainure transversale (7'), à un angle (α') de 15° à 30° par rapport à la direction axiale et dans laquelle la première section de rainure (7'b) s'étend, par rapport à la ligne centrale (m₁') de la rainure transversale (7'), à un angle (β') de 0° à 10° par rapport à la direction axiale,
et/ou
**en ce que** la bande de roulement comprend au moins une rangée de blocs profilés centrale (2), dans laquelle la deuxième section de rainure (7a) s'étend, par rapport à la ligne centrale (m₁) de la rainure transversale (7), à un angle (α) de 40° à 50° par rapport à la direction axiale et dans laquelle la première section de rainure (7b) s'étend, par rapport à la ligne centrale (m₁) de la rainure transversale (7), à un angle (β) de 0° à 15° par rapport à la direction axiale.

2. Pneumatique de véhicule selon la revendication 1, **caractérisé en ce que** les creux (11, 11') sont délimités dans la direction radiale par un fond (11a, 11'a), qui est incliné d'un angle constant (θ) par rapport à la direction radiale, de telle sorte que les creux (11, 11') présentent leur emplacement le plus profond au niveau de la rainure transversale (7, 7').

3. Pneumatique de véhicule selon la revendication 1 ou 2, **caractérisé en ce que** les creux (11) présentent au niveau de la rainure transversale respective (7) au niveau de leur emplacement le plus profond une profondeur (T₁) coïncidant avec la rainure transversale (7) .

4. Pneumatique de véhicule selon l'une quelconque des revendications 1 à 3, **caractérisé en ce que** les creux (11, 11') présentent au niveau de la rainure transversale respective (7, 7') une largeur (B₂) déterminée au niveau de la périphérie de bande de roulement de 100 % à 200 %, notamment de 150 % à 170 %, de la largeur (B₁) de la rainure transversale (7, 7').

5. Pneumatique de véhicule selon l'une quelconque des revendications 1 à 4, **caractérisé en ce que** les creux (11, 11') présentent chacun deux surfaces de délimitation (11b, 11c) raccordées l'une à l'autre et s'étendant vers la rainure transversale (7, 7'), qui forment en vue de dessus un angle (δ) de 90° ± 10°, notamment de 90° ± 5°.

6. Pneumatique de véhicule selon l'une quelconque des revendications 1 à 5, **caractérisé en ce que** les creux (11, 11') présentent des surfaces de délimitation (11b, 11c) qui, telles que vues dans la section transversale, s'étendent à un angle (γ, ε) de 0° à 7°, notamment de 2° à 5°, par rapport à la direction radiale.

7. Pneumatique de véhicule selon la revendication 5 ou 6, **caractérisé en ce qu'**une des surfaces de délimitation (11b) s'étend à partir de l'emplacement de coude (12, 12'), au niveau duquel les sections de rainure (7a, 7b) sont raccordées l'une à l'autre, en continuation d'un flanc de rainure (10).

8. Pneumatique de véhicule selon l'une quelconque des revendications 1 à 7, dans lequel la bande de roulement comprend au moins une rangée de blocs profilés centrale (2), qui est divisée en blocs profilés (6) par une pluralité de rainures transversales (7) s'étendant parallèlement les unes aux autres, **caractérisé en ce que** la deuxième section de rainure (7a) des rainures transversales (7) présente une longueur d'étendue (l₁) de 45 % à 65 % de la longueur de rainure de la rainure transversale (7), la longueur d'étendue (l₁) et la longueur de rainure étant chacune déterminées le long de la ligne centrale (m₁) de la rainure transversale (7) .

9. Pneumatique de véhicule selon l'une quelconque des revendications 1 à 8, **caractérisé en ce que** les creux (11, 11') sont réalisés en vue de dessus sous la forme d'un triangle, le côté le plus long du triangle étant situé au niveau de la rainure transversale (7, 7').
